## Europäisches Patentamt

## European Patent Office

## Office européen des brevets

(11) Veröffentlichungsnummer: **0 005 158**
A2

# EUROPÄISCHE PATENTANMELDUNG

(21) Anmeldenummer: 79100784.2

(22) Anmeldetag: 15.03.79

(51) Int. Cl.²: **C 08 J 3/10,** C 09 D 3/36, B 05 D 7/16

(30) Priorität: 27.04.78 AT 3022/78

(43) Veröffentlichungstag der Anmeldung: 14.11.79 Patentblatt 79/23

(84) Benannte Vertragsstaaten: DE FR GB IT SE

(71) Anmelder: VIANOVA KUNSTHARZ AKTIENGESELLSCHAFT, A-8402 Werndorf (AT)

(72) Erfinder: Zima, Herbert, Dr., Eichenweg 7, A-8042 Graz (AT)
Erfinder: Dworak, Gert, Dr., Dr.-Robert-Grafstrasse 25/9, A-8010 Graz (AT)

(74) Vertreter: Müller, Hans-Jürgen, Dipl.-Ing. et al, Lucile-Grahn-Strasse 38/II, D-8000 München 80 (DE)

(54) Verfahren zur Herstellung von wässrigen Überzugsmittelemulsionen.

(57) Es werden wäßrige Überzugsmittel für den Auftrag durch ein chemisches Niederschlagsverfahren auf Metall hergestellt. Die Produkte sind Emulsionen auf der Basis von Addukten $\alpha,\beta$-äthylenisch ungesättigter Carbonsäuren an Homo- und/oder Copolymerisate von Alkandienen, beispielsweise Butadien oder Pentadien, mit einem Säuregehalt des Adduktes entsprechend 12,5–25 Gew.% Maleinsäureanhydrid. Die Anhydridstrukturen können gegebenenfalls durch Hydrolyse oder Halbesterbildung geöffnet werden. Die Emulgierung in Wasser erfolgt in Gegenwart anionischer, gegebenenfalls anteilig nicht ionischer Emulgatoren. Das bei der Herstellung des Harzes mitverwendete organische Lösungsmittel wird gleichzeitig teilweise oder vollständig entfernt. Die Produkte können mit zusätzlichen Härtungskomponenten oder anderen Harzen emulgiert werden. Zur Auslösung der Koagulation beim Auftragsverfahren werden entsprechende Reagenzien, wie Fluorwasserstoffsäure oder Eisen-(III)-salze verwendet. Die Emulsionen eignen sich auch zur Herstellung von Überzugsmitteln, auch lufttrocknenden, die für konventionelle Auftragsarten geeignet sind. Die Emulsionen ergeben in jedem Fall Überzüge mit ausgezeichneten Eigenschaften.

- 1 -

## Verfahren zur Herstellung von wäßrigen Überzugsmittelemulsionen.

Die Erfindung betrifft ein Verfahren zur Herstellung von Überzugsmitteln auf der Basis von wäßrigen Emulsionen von Addukten α,ß-äthylenisch ungesättigter Carbonsäuren an Polymerisate von Dienen. Die erfindungsgemäßen Emulsionen können zur Herstellung von Überzügen, insbesondere zur Ausbildung von korrosionsfesten Überzügen auf metallischen Oberflächen durch Eintauchen der Metalloberflächen in die sauren wäßrigen Emulsionen Verwendung finden.

Es ist bekannt, daß wasserlösliche Bindemittel auf der Grundlage von Dienpolymerisaten wegen der Unverseifbarkeit und Korrosionsbeständigkeit dieser Rohstoffkomponente große Bedeutung für die Herstellung von Grundierungen , die durch das Elektrotauchlackierverfahren aufgebracht werden, erlangt haben.

Aus den FR-PSen 1,467,595 und 1,509,692 ist es bekannt, Polymerisate von Dienen, insbesondere von Butadien, mit Maleinsäureanhydrid umzusetzen, und die anfallenden Reaktionsprodukte nach Neutralisation mit Basen in eine wasserlösliche Form zu bringen.

In den AT-PSen 289,269; 295,692; 303,920 werden wasserlösliche Überzugsmittel beschrieben, die Kombinationen von gegebenenfalls partiell veresterten Addukten des Maleinsäureanhydrids mit Dien-Polymerisaten und Kondensationsprodukten von Formaldehyd und Phenolcarbonsäuren und Phenolen,sowie gegebenenfalls Polyhydroxylverbindungen mit mindestens 2 Hydroxylgruppen,darstellen. Ein anderer Vorschlag wurde in der DE-OS 2,016,223 veröffentlicht. Dabei werden die Dienpolymerisate in Mischung mit natürlichen Ölen mit Maleinsäureanhydrid zu Polycarbonsäureharzen umgesetzt. Eine ähnliche Vorgangsweise unter Benutzung anderer $\alpha,\beta$-ungesättigter Dicarbonsäuren wird in der US-PS 3,489,704 beschrieben.

Aus einer Anzahl von Literaturstellen, wie z. B. der US-PS 3,592,699, der DE-OS 26 12 995 sowie den GB-PSen 1,099,461, 1,241,991, 1,312,097, 1,349,826, 1,349,827 und 1,356,215 ist es ferner bekannt, aus sauren Latexbädern Überzüge auf Metalloberflächen, insbesondere auf Eisenoberflächen dadurch abzuscheiden, daß man die gereinigte Eisenoberfläche in eine etwa 10%ige Polymerdispersion taucht, die Fluorwasserstoffsäure als Ätzmittel für die Eisenoberfläche und ein Oxydationsmittel und/oder ein Eisen-(III)-salz enthält. Die vorhandenen bzw. sich bildenden Eisen-(III)-Ionen bewirken eine Fällung des Latex auf der Eisenoberfläche.

In diesen Literaturstellen werden als Überzugsmittel Polymerdispersionen (Latices) auf der Basis von Styrol-Butadiencopolymeren, Acrylcopolymeren, Vinylchloridpolymeren, Polyäthylen und Poly-Tetrafluoräthylen vorgeschlagen. Wesentliche Nachteile dieser Gruppe von Bindemitteln, sowohl für das beschriebene Niederschlagsverfahren,als auch bezüglich der Eigenschaften der erzielten Überzüge, liegen in der schnell zunehmenden Dicke der Beschichtung bei längerer Eintauchzeit des Substrats in das Beschichtungsbad sowie in der mangelnden Überlackierbarkeit, d. h. einer mangelhaften Haftfestigkeit der auf solchen Schichten applizierten weiteren Lackschichten sowie einem relativ geringen Korrosionsschutz.

Die vorliegende Erfindung betrifft neue Kunstharzemulsionen, die gegenüber solchen Polymerisatdispersionen wesentliche technische Vorteile bieten, und zwar die einwandfreie Möglichkeit zur Überlackierung der Beschichtung, einen gegenüber den Latex-Dispersionen wesentlich verbesserten Korrosionsschutz und das Wegfallen der sonst notwendigen Chromsäurebehandlung. Überdies kann die Menge an mittelbaren oder unmittelbaren Koagulationsmitteln beim chemischen Niederschlagsverfahren wesentlich vermindert werden.

Die Bedeutung dieser Vorteile liegt für den Fachmann auf der Hand. Die Überlackierbarkeit, d. h. die einwandfreie Haftung der nächsten Lackschicht, ist eine grundsätzliche Voraussetzung für die Verwendung von Überzugsmitteln als Grundierung und damit als erste und für den Korrosionsschutz wesentliche Schicht eines mehrschichtigen Lackaufbaues. Über die Bedeutung eines verbesserten Korrosionsschutzes braucht heute kein Wort verloren zu werden. Der Wegfall einer nachträglichen Behandlung der Beschichtung mit Chromsäure stellt, ebenso wie die Verminderung der notwendigen Zusätze, einen wesentlichen Schritt in bezug auf eine Vereinfachung, eine Verbilligung und eine Verbesserung in ökologischer Hinsicht dar.

Das erfindungsgemäße Verfahren zur Herstellung von Überzugsmittelemulsionen auf der Basis von Addukten $\alpha,\beta$-äthylenisch ungesättigter Carbonsäuren an Polymerisate von Dienen, welche insbesondere durch ein chemisches Niederschlagsverfahren aus den säurehaltigen Emulsionen auf metallische Substrate niedergeschlagen werden können, ist dadurch gekennzeichnet, daß man Addukte $\alpha,\beta$-äthylenisch ungesättigter Carbonsäuren an Homopolymerisate von Alkandienen und/oder Copolymerisate dieser Alkandiene mit anderen Monomeren mit einem Säuregehalt entsprechend

- 4 -

12,5 bis 25 Gew.-% Maleinsäureanhydrid (bezogen auf das Addukt), nach Öffnung gegebenenfalls vorliegender Anhydridstrukturen durch Hydrolyse oder Halbesterbildung mit Alkoholen, gegebenenfalls in Gegenwart anionischer, sowie gegebenenfalls anteilig nichtionischer Emulgatoren unter gleichzeitiger teilweiser oder vollständiger Entfernung der organischen Lösungsmittel, in Wasser emulgiert.

Die Herstellung der erfindungsgemäß eingesetzten Addukte von $\alpha,\beta$-äthylenisch ungesättigten Carbonsäuren an Polymerisate von Dienen ist ebenso wie die dafür einsetzbaren Rohstoffe prinzipiell aus der Literatur bekannt. Für die Addukte, welche für das vorliegende Verfahren eingesetzt werden, sind jedoch zur Erzielung optimaler Ergebnisse gewisse Auswahlprinzipien einzuhalten.

Aus der Reihe der Alkandienpolymerisate werden zur Erzielung optimaler Ergebnisse solche eingesetzt, welche bezüglich ihrer Mikrostruktur und ihres Molekulargewichts folgende Kriterien erfüllen:

50 - 100 % 1,4-cis-Doppelbindungen
50 - 0 % 1,4-trans-Doppelbindungen
20 - 0 % 1,2-Vinyl-Doppelbindungen
Molekulargewicht: 500 - 10.000, vorzugsweise 1000 bis 5000. Im einzelnen zählen zu dieser Produktgruppe Homopolymerisate oder Copolymerisate des Butadiens und Pentadiens, wobei die Copolymerisate überwiegend aus den genannten Alkandienen aufgebaut sind. Cyclodiene, wie Cyclopentadienpolymerisate oder Gemische verschiedener adduzierfähiger Kohlenwasserstoffharze können ebenfalls im untergeordneten Maße zur Herstellung der erfindungsgemäßen Adduktemulsionen herangezogen werden.

Die "Adduktstärke", d. h. das Verhältnis zwischen Carbonsäure und Dienpolymerisat liegt bei Verwendung von Maleinsäureanhydrid als dienophiler Komponente zwischen 1 : 3 und 1 : 7, entsprechend einem Anteil von 25 bis 12,5 Gew.-% Maleinsäureanhydrid, bezogen auf das Gesamtprodukt. Bei Verwendung anderer Carbonsäuren, wie Acrylsäure, Itaconsäure, u. a. kann der resultierende Säurezahlbereich als Kriterium angesehen werden. Die Herstellung der Addukte erfolgt bei Temperaturen zwischen 180 und 220°C in Gegenwart von Inhibitoren, wie Diphenyl-p-phenylendiamin oder 2,2'-methyl-bis-6-tert.-butyl-4-methyl-phenol und unter möglichst weitgehendem Ausschluß von Sauerstoff. In allen Fällen wird eine praktisch vollständige Bindung der Carbonsäure angestrebt. Bei Verwendung von Carbonsäureanhydriden erfolgt anschließend, gegebenenfalls in Gegenwart möglichst geringer Mengen anhydridinerter Lösungsmittel, eine Öffnung des Anhydridringes durch Wasser und/oder unter Partialesterbildung mit Alkoholen.

Zur besseren Handhabung können die Addukte anschließend mit weiteren Lösungsmitteln verdünnt werden, wobei gegebenenfalls diese Lösungsmittel bei der Emulgierung wieder abdestilliert werden. Geeignete Lösungsmittel zum Verdünnen der Addukte sind solche, deren Siedepunkt unterhalb dem des Wassers liegt oder die mit Wasser Azeotrope bilden, deren Siedepunkte unter dem des Wassers liegen, wie beispielsweise Äthylacetat, Methyläthylketon, aliphatische Kohlenwasserstofflösungsmittel und Aromaten wie Benzol und Toluol.

Die Emulgierung der Addukte kann in verschiedener Weise erfolgen: So kann beispielsweise die Lösung eines Adduktes der erwärmten Flotte, welche das Wasser und den Emulgator enthält, langsam unter Rühren zugegeben werden, wobei das Lösungsmittel, gegebenenfalls unter Vakuum, laufend abdestilliert wird. Nach Beendigung des Zulaufes wird das restliche Lösungsmittel durch Destillation vollständig entfernt und die Dispersion unter Rühren abgekühlt. Man erhält dabei sehr stabile Dispersionen.

Eine andere Möglichkeit, die Addukte in wäßrige Dispersionen überzuführen, besteht darin, daß man das Addukt mit dem Emulgator vermischt, erwärmt und das Wasser unter Rühren zulaufen läßt. Weiters kann man den Emulgator in Wasser lösen und dem erwärmten Addukt unter Rühren zugeben. Ebenso kann Addukt, Emulgator und Wasser in das Rührwerk eingefüllt und unter Rühren bis zur vollständigen Emulgierung erwärmt werden. Vorteilhafterweise wird auch in diesen Fällen das Lösungsmittel soweit wie möglich wieder aus der Emulsion entfernt.

Für die Dispergierung geeignete anionische Emulgatoren sind beispielsweise Natriumlaurylsulfat, Dodecylbenzolsulfat und Tridecylalkohol und sulfierte, polyäthoxylierte Octylphenole und Nonylphenole. Die Verwendung von nichtionischen Emulgatoren ist bei der Herstellung der erfindungsgemäßen Emulsionen im allgemeinen nicht notwendig. In manchen Fällen werden solche Verbindungen als Pigmentbenetzungsmittel bei der Formulierung von Lacken eingesetzt.

Für den Einsatz zur Beschichtung metallischer Substrate nach dem chemischen Niederschlagsverfahren werden die Adduktemulsionen mit den Reagenzien versetzt, durch welche die Abscheidung der Emulsionen auf dem Substrat ausgelöst wird. Im allgemeinen handelt es sich dabei um verdünnte wäßrige Lösungen von Fluorwasserstoffsäure in Kombination mit Salzen mehrwertiger Metalle, insbesondere Eisen-(III)-salzen. Im Vergleich zu den Produkten des Standes der Technik kann die Menge der die Abscheidung auslösenden Reagenzien in den erfindungsgemäßen Überzugsmittelemulsionen wesentlich vermindert werden. Die Mindestmenge an diesen Reagenzien liegt bei ca. 0,15 % bezogen auf das verwendungsfähige Badmaterial, wobei der Anteil an Fluorwasserstoffsäure bis auf 0,003 % vom Badmaterial vermindert werden kann.

In diese Lösungen werden entfettete und gegebenenfalls nach den verschiedenen Phosphatierungsverfahren vorbehandelte Stahlbleche bzw. andere metallische Substrate, deren Oberflächen unter Bildung von mehrwertigen Metallionen durch das saure Milieu des Bades angegriffen werden, eingetaucht. In den üblichen Beschichtungszeiten von 60 bis 180 Sekunden scheiden sich auf dem Substrat Filme ab, welche nach Spülen mit Wasser bei Temperaturen zwischen 160 und 190°C thermisch vernetzt werden. Die unter diesen Bedingungen erhaltenen Überzüge weisen Schichtstärken zwischen 10 und 30 μm auf.

In einer besonderen Ausführungsform des Beschichtungsverfahrens werden dem Emulsionsbad andere Harze zugesetzt bzw. zusammen mit dem Dienaddukt emulgiert. Besonders interessante Ergebnisse werden erhalten, wenn man zusammen mit dem Addukt als weitere Komponente 1 bis 50 Gew.-% eines niedrigmolekularen Polydienöls, dessen olefinische Doppelbindungen teilweise nach üblichen Verfahren epoxidiert sind, emulgiert. Durch diese Maßnahme wird die Schichtausbildung bei der Abscheidung nach dem chemischen Niederschlagsverfahren wesentlich beeinflußt, wodurch nach dem Einbrennen gleichmäßige Filme mit günstigen Schichtstärken entstehen.

Selbstverständlich können die erfindungsgemäßen Überzugsmittel - ohne die für das chemische Niederschlagsverfahren notwendigen Zusätze - auch für konventionelle Auftragsverfahren, wie Tauchen, Spritzen, Fluten, Walzen etc. gegebenenfalls unter Mitverwendung von Vernetzungsmitteln wie Phenol- oder Aminoharzen, verwendet werden. Für alle Applikationen können in den Bindemitteln die für die Applikationsverfahren brauchbaren Pigmente, Farbstoffe und Füllstoffe dispergiert werden. Obwohl bevorzugt eine thermische Vernetzung zur Filmbildung herangezogen wird, können unter Verwendung der bekannten Trocknungskatalysatoren auch lufttrocknende Überzugsmittel formuliert werden.

Die nachfolgenden Beispiele dienen zur Erläuterung der Erfindung. Alle Prozentangaben in den Beispielen, soferne nichts anderes angegeben ist, Gewichtsprozente; Teile sind Gewichtsteile.

Herstellung der in den Beispielen verwendeten Addukte

A 1: 500 g eines flüssigen Polybutadiens mit einer Viskosität von 30 $\pm$ 10 % mPa.s/20°C (DIN 53 015), einer Jodzahl von etwa 450 (ASTM D 2078) und einer Mikrostruktur von etwa 80 % 1,4-cis-, 19 % 1,4-trans- und 1 % 1,2-vinyl-Anteilen, 0,1 g Diphenyl-p-phenylendiamin und 100 g Maleinsäureanhydrid werden in einem Dreihalskolben unter Rühren, Rückflußkühlung und Inertgaszufuhr in ca. 3 Stunden auf 200°C erwärmt. Nach etwa 4 Stunden Reaktionsdauer bei 200°C ist kein freies Maleinsäureanhydrid mehr nachweisbar. Man kühlt auf 90°C, hydrolysiert mit 30 g Wasser und verdünnt mit 400 g Äthylacetat auf einen Festkörpergehalt von 60 %. Die Säurezahl beträgt 160 - 180 mg KOH/g.

A 2: 600 g eines flüssigen Butadienhomopolymeren mit einer Viskosität von 750 $\pm$ 10 % mPa.s/20°C (DIN 53 015), einer Jodzahl von etwa 450 (ASTM D 2078) und einer Mikrostruktur von etwa 70 % 1,4-cis-, 28 % 1,4-trans- und 2 % 1,2-vinyl-Anteilen, 0,1 g Diphenyl-p-phenyldiamin und 100 g Maleinsäureanhydrid werden in einem Dreihalskolben unter Rühren, Rückflußkühlung und Inertgaszufuhr in ca. 3 Stunden auf 200°C erwärmt. Nach 4 Stunden Reaktionsdauer bei 200°C ist kein freies Maleinsäureanhydrid mehr nachweisbar. Man kühlt auf 90°C, hydrolysiert mit 30 g Wasser und verdünnt mit 167 g Äthylacetat auf 80 %. Die Säurezahl (berechnet auf Festharz) beträgt 140 - 160 mg KOG/g.

A 3: 400 g eines flüssigen Polybutadiens, wie es in A 2 eingesetzt wird, 0,1 g Diphenyl-p-phenylendiamin und 100 g Maleinsäureanhydrid werden in einem Dreihalskolben unter Rühren, Rückflußkühlung und Inertgaszufuhr in ca. 3 Stunden auf 200°C erwärmt. Nach 4 Stunden Reaktionsdauer bei 200°C ist kein freies Maleinsäureanhydrid mehr nachweisbar. Man kühlt auf 90°C, hydrolysiert mit 30 g Wasser und verdünnt mit 210 g Toluol auf 70 %. Die Säurezahl (berechnet auf Festharz) beträgt 180 - 210 mg KOH/g.

Beispiel 1: In einen mit Rührer Zutropftrichter, Thermometer, Wasserabscheider, Kühler und Inertgaszufuhr ausgestatteten Kolben gibt man eine Lösung von 2,5 Teilen Natriumlaurylsulfat in 280 Teilen Wasser. Der Zutropftrichter wird mit 240 Teilen einer 50 % Harz enthaltenden Lösung des Adduktes A 1 in Äthylacetat beschickt.

Man erwärmt die Flotte im Kolben auf 80°C und läßt die Harzlösung im Verlauf von 2 Stunden unter Rühren zulaufen, wobei man das miteingebrachte Äthylacetat laufend möglichst schnell abdestilliert. Nach beendetem Zulauf wird der Rest des Äthylacetats und etwas Wasser abdestilliert und die Emulsion unter Rühren abgekühlt. Sie hat einen Festgehalt von ca. 32 % und eine Teilchengröße von durchschnittlich 1 - 2 µm.

Beispiel 2 : In der in Beispiel 1 beschriebenen Apparatur wird eine Lösung von 7,5 Teilen Natriumlaurylsulfat in 1500 Teilen Wasser vorgelegt und auf 80°C erwärmt. In den Zutropftrichter gibt man eine Mischung aus 667 Teilen des Adduktes A 1, 100 Teilen eines epoxidierten Polybutadiens (siehe unten) und 483 Teilen eines Benzinkohlenwasserstoffes mit einem Siedebereich zwischen 80 - 120°C und läßt diese Mischung innerhalb von ca. 2 Stunden unter Rühren in die Vorlage laufen, während man die Lösungsmittel und etwas Wasser abdestilliert.

Man erhält eine sehr stabile, koagulatfreie Emulsion mit ca. 30 % Festgehalt und einer Teilchengröße von max. 0,5 µm. Das in diesem Beispiel eingesetzte epoxidierte Polybutadien weist einen Epoxidsauerstoffgehalt von ca. 8 % auf. Das Polybutadien hatte eine Viskosität von 750 $\pm$ 10 % mPa.s (20°C/DIN 53 015), eine Jodzahl von 450 $\pm$ 5 % (ASTM D 2078) sowie eine sterische Zusammensetzung von ca. 72 % 1,4-cis-Doppelbindungen, ca. 27 % 1,4-trans-Doppelbindungen und ca. 1 % vinyl-Doppelbindungen.

Beispiel 3 : In ein Rührwerk füllt man 100 Teile Addukt A 2, 1,5 Teile Natriumlaurylsulfat und 240 Teile Wasser. Man erwärmt unter Rühren, wobei eine feinteilige ca. 30%ige Emulsion entsteht.

Beispiel 4 : In einem Rührwerk mischt man 100 Teile Addukt A 3 mit 1,5 Teilen Natriumlaurylsulfat, erwärmt die Mischung und läßt 240 Teile heißes Wasser zulaufen, wobei man gleichzeitig Toluol und etwas Wasser abdestilliert. Man erhält eine ca. 30%ige Emulsion.

Beispiel 5 : In ein Rührwerk füllt man 100 Teile eines wie Addukt A 1 hergestellten, jedoch nicht mit Äthylacetat verdünnten Adduktes, 2,4 Teile Dodecylbenzolsulfonat und 240 Teile Wasser. Man erwärmt unter Rühren bis sich eine ca. 30%ige Emulsion gebildet hat.

Anwendung der erfindungsgemäßen Emulsionen für das chemische Niederschlagsverfahren

I) Aus der nach Beispiel 1 hergestellten Emulsion wird ein Tauchbad bereitet, indem man in 100 Teile einer wäßrigen Lösung von Fluorwasserstoffsäure und Eisen-(III)-fluorid, die 0,5 % Fluorwasserstoffsäure und 0,5 % an Eisen-(III)-fluorid enthält, 50 Teile der 30%igen Emulsion unter intensiver Rührung einträgt. In dieses Bad taucht man unter schwacher Bewegung der Flüssigkeit ein gereinigtes und entfettetes Eisenblech. Bei einer Eintauchzeit von 90 - 300 Sekunden scheidet sich auf dem Blech ein Überzug ab, dessen Dicke auch bei längerem Eintauchen nicht mehr zunimmt. Das beschichtete Blech wird mit deionisiertem Wasser gespült und 30 Minuten bei 170°C eingebrannt. Die Trockenfilmstärke beträgt 10 - 12 μm.

II) Man mischt 50 Teile einer 0,25%igen wäßrigen Lösung von Fluorwasserstoffsäure mit 50 Teilen einer 0,25%-igen wäßrigen Lösung von Eisen-(III)-fluorid und rührt in diese Mischung 50 Teile einer nach Beispiel 2 hergestellten 30%igen Emulsion ein. In dieses Bad taucht man unter schwacher Bewegung der Flüssigkeit ein gut gereinigtes und entfettetes Eisenblech.

Es scheidet sich bei einer Eintauchzeit von 30 Sekunden ein 15 - 18 μm starker und bei 90 Sekunden Tauchzeit ein 25 - 30 μm starker Kunstharzüberzug auf dem Blech ab. Der Überzug wird mit deionisiertem Wasser gespült und 15 Minuten bei 180°C eingebrannt. Die im Salzsprühtest gemäß ASTM B 117-64 belasteten Bleche zeigen nach 400 Stunden am Kreuzschnitt eine Unterwanderungszone von 8 mm Breite.

III) In 100 Teilen eines Tauchbades, hergestellt aus einer Emulsion gemäß Beispiel 2, das 0,003 % Fluorwasserstoff, 0,157 % Eisen-(III)-fluorid und 10 % emulgiertes Kunstharz enthält, dispergiert man 16,5 Teile einer 30%igen Rußdispersion, die 4 % eines nichtionischen Emulgators enthält ~~(Derusol A 300)~~. In dieses Bad taucht man zinkphosphatierte bzw. eisenphosphatierte Bleche. Bei einer Tauchzeit von 120 Sekunden scheiden sich 20 - 22 µm starke, gleichmäßig schwarze Überzüge auf den Blechen ab, die nach kurzer Vortrocknung 15 Minuten bei 180°C eingebrannt werden. Die erhaltenen Überzüge sind mit Füller- und Decklackmaterialien auf Lösungsmittel- oder Wasserbasis überlackierbar, ohne daß Haftungsschwierigkeiten beobachtet werden. Sie zeigen eine ausgezeichnete Korrosionsfestigkeit im Salzsprühtest nach ASTM B 117-64, wobei nach einer Belastungszeit von 500 Stunden bei beiden Vorbehandlungsmethoden eine Unterwanderungszone am Kreuzschnitt von ca. 8 mm Breite beobachtet wird.

- 1 -

Patentansprüche :

1. Verfahren zur Herstellung von wäßrigen Überzugsmittelemulsionen auf der Basis von Addukten α,ß-äthylenisch ungesättigter Carbonsäuren an Polymerisate von Dienen, welche insbesondere durch ein chemisches Niederschlagsverfahren aus den säurehaltigen Emulsionen auf metallische Substrate niedergeschlagen werden können, dadurch gekennzeichnet, daß man Addukte α,ß-äthylenisch ungesättigter Carbonsäuren an Homopolymerisate von Alkandienen und/oder Copolymerisate dieser Alkandiene mit anderen Monomeren mit einem Säuregehalt entsprechend 12,5 bis 25 Gew.-% Maleinsäureanhydrid (bezogen auf das Addukt), nach Öffnung gegebenenfalls vorliegender Anhydridstrukturen durch Hydrolyse oder Halbesterbildung mit Alkoholen, gegebenenfalls in Gegenwart organischer Lösungsmittel in Gegenwart anionischer, sowie gegebenenfalls anteilig nichtionischer Emulgatoren unter gleichzeitiger teilweiser oder vollständiger Entfernung der organischen Lösungsmittel in Wasser emulgiert.

2. Verfahren nach Anspruch 1, dadurch gekennzeichnet, daß man als Alkandienpolymerisate solche mit einer Mikrostruktur von 50 - 100 % 1,4-cis-, 0 - 50 % 1,4-trans- und 0 - 20 % 1,2-vinyl-Konfiguration einsetzt.

3. Verfahren nach den Ansprüchen 1 und 2, dadurch gekennzeichnet, daß man als Alkandienpolymerisate solche mit einem Molekulargewicht zwischen 500 und 10.000, vorzugsweise zwischen 1000 und 5000 einsetzt.

4. Verfahren nach den Ansprüchen 1 bis 3, dadurch gekennzeichnet, daß man als Alkandienpolymerisate solche des Butadiens und/oder Pentadiens einsetzt.

5. Verfahren nach den Ansprüchen 1 bis 4, dadurch gekennzeichnet, daß man in Mischung mit den Alkandienen untergeordnete Mengen von Cyclodienen und/oder anderen adduzierfähigen Kohlenwasserstoffharzen zur Adduktbildung einsetzt.

6. Verfahren nach den Ansprüchen 1 bis 5, dadurch gekennzeichnet, daß man den Emulsionen aus Dienpolymerisaten andere Harze als Härtungskomponenten zusetzt.

7. Verfahren nach den Ansprüchen 1 bis 6, dadurch gekennzeichnet, daß man die Emulgierung der Dienpolymerisate in Gegenwart anderer Harze durchführt.

8. Verfahren nach den Ansprüchen 1 bis 7, dadurch gekennzeichnet, daß man mit den Dienpolymerisaten epoxidierte Butadienpolymerisate emulgiert.

9. Verfahren nach den Ansprüchen 1 bis 8, dadurch gekennzeichnet, daß man die Überzugsmittelemulsionen für die Verwendung nach dem chemischen Niederschlagsverfahren mit mindestens 0,15 Gew.-%, bezogen auf das verwendungsfähige Tauchbad, eines oder mehrerer die Koagulation auslösender Reagenzien versetzt.

10. Verfahren nach den Ansprüchen 1 bis 9, dadurch gekennzeichnet, daß man die Überzugsemulsionen für die Verwendung nach dem chemischen Niederschlagsverfahren mit mindestens 0,003 Gew.-% Fluorwasserstoffsäure versetzt.